# EUROPÄISCHE PATENTSCHRIFT

(11) **EP 1 378 321 B1**
(45) Veröffentlichungstag und Bekanntmachung des Hinweises auf die Patenterteilung: **09.02.2005**
(21) Anmeldenummer: 03012537.1
(22) Anmeldetag: 02.06.2003
(51) Int. Cl.: B23Q 11/08

(54) **Teleskopelement**
Telescopic element
Elément télescopique

(30) Priorität: 24.06.2002 DE 20209776 U
(43) Veröffentlichungstag der Anmeldung: 07.01.2004
(73) Patentinhaber: Hennig Holding GmbH, 85543 Kirchheim (DE)
(72) Erfinder: Schönerwald, Kurt, 84186 Vilsheim (DE)
(74) Vertreter: Zinnecker, Armin, Dipl.-Ing.

(56) Entgegenhaltungen:
- EP-A- 0 341 411
- DE-A- 4 213 246
- DE-C- 3 522 884
- DATABASE WPI Section PQ, Week 198301 Derwent Publications Ltd., London, GB; Class P56, AN 1983-A1951K XP002254819 -& SU 904 989 A (AS UKR HARD MATERIALS), 15. Februar 1982 (1982-02-15)

## Beschreibung

Die Neuerung betrifft ein Teleskopelement für eine Abdeckung an einer Maschine oder einer sonstigen Vorrichtung, insbesondere an einer Werkzeugmaschine.

Aus der DE-A-197 30 500 ist ein Auszugsystem mit mindestens vier hintereinander angeordneten und in einer Auszugrichtung sowie einer dazu entgegengesetzten Einschubrichtung zwischen einer Einschubstellung und einer Auszugstellung relativ zueinander bewegbaren Auszugelementen bekannt. Dieses Auszusystem wird beispielsweise zur Abdeckung von Führungsbahnen einer Werkzeugmaschine eingesetzt, um diese während des Betriebs der Werkzeugmaschine vor Verunreinigungen zu schützen.

Aus der DE-U-295 00 395 ist eine faltenartige Schutzabdeckung bekannt, die insbesondere für Werkzeugmaschinen und sonstige Bearbeitungsmaschinen verwendet werden kann und die aus einer Vielzahl von Lamellen besteht, die miteinander durch scharnierartige Kopplungselemente verbunden sind. Diese Schutzabdeckung ist besonders für Werkzeugmaschinen und sonstige Bearbeitungsmaschinen geeignet, in deren Bearbeitungsbereich Kühlmittel und Schmiermittel austreten sowie Späne und/oder Staub entstehen. Die Lamellen können starr ausgebildet sein. Sie sind vorzugsweise als flache Längsprofile ausgebildet.

Aus der EP-A-0 341 411 ist eine Werkzeugmaschine mit einem entlang mehrerer Koordinatenachsen verfahrbaren Spindelstock, mit einem langgestreckten Werkstücktisch, dessen Längsachse zu einer der Koordinatenachsen parallel ist, und mit einer den Spindelstock und den Werkstücktisch umgebende Verkleidung bekannt.

Um den hinter dem Spindelstock befindlichen Raum der Werkzeugmaschine vor herumfliegenden Metallspänen und herumspritzendem Bohrwasser zu schützen, ist in Richtung der zur Längsachse des Werkstücktisches parallelen Koordinatenachse zu beiden Seiten des Spindelstockes eine Trennwand angeordnet, die den Zwischenraum zwischen Spindelstock und Seitenwänden der Verkleidung überspannt und die längenveränderlich ausgebildet ist. Die Trennwand ist mit starren Wandelementen ausgebildet, die mit Stäben gelenkig verbunden sind.

Aus der DE-A-100 60 139 ist eine Gliederschürze zur Abdeckung von Maschinenteilen, insbesondere zur Abdeckung von Werkzeugmaschinenteilen, mit einer Vielzahl von gelenkig miteinander verbundenen Gliedern bekannt. Die Gliederschürze kann zur Abdeckung von Maschinenteilen, Werkzeugmaschinenteilen und sonstigen Vorrichtungen aller Art verwendet werden. Die Glieder, die im wesentlichen als langgestreckte Streifen oder Lamellen ausgestaltet sind, sind gelenkig miteinander verbunden. Die Gliederschürze wird insbesondere in der Weise verwendet, daß ein Endglied mit der Maschine oder Werkzeugmaschine oder sonstigen Vorrichtung verbunden ist, während das andere Endglied mit einem bewegten Maschinenteil oder Vorrichtungsteil oder Werkzeugmaschinenteil verbunden ist, insbesondere mit einem Spindelrahmen einer Werkzeugmaschine.

Abdeckungen der beschriebenen Art werden im Betrieb ausgefahren und wieder eingefahren, wobei sich dieser Vorgang oftmals wiederholt. Dabei wirken auf die Teleskopelemente beim Beschleunigen und Abbremsen hohe Bewegungskräfte, nämlich - je nach Antriebsart - Anschlagkräfte oder Kräfte auf Scherenglieder oder Kräfte auf Kettengetriebe.

Aufgabe der Erfindung ist es, bei einem Teleskopelement der eingangs beschriebenen Art die Dynamik zu verbessern.

Gemäß der Neuerung wird diese Aufgabe durch die Merkmale des Anspruchs 1 gelöst. Das Teleskopelement umfaßt einen Trägerrahmen und eine Außenhaut. Hierdurch kann die Masse des Teleskopelements reduziert werden, wodurch die auf das Teleskopelement wirkenden Bewegungskräfte (je nach Antriebsart: Anschlagkräfte, Kräfte, die auf Scherenglieder wirken oder Kräfte, die auf Kettengetriebe wirken etc.) verringert werden können. Auch der Energiebedarf zum Beschleunigen der Teleskopelemente kann reduziert werden.

Der Trägerrahmen kann aus einem Material gefertigt sein, das bei einem verhältnismäßig geringen Gewicht eine hohe Festigkeit aufweist, so daß die Stabilität des Teleskopelements ausschließlich oder vorwiegend durch den Trägerrahmen gewährleistet wird. Die Außenhaut kann aus einem weniger festen Material hergestellt sein, so daß sich die von der Außenhaut zu erfüllende Funktion im wesentlichen oder ausschließlich auf die Abdeckfunktion beschränkt. Die gesamte Anordnung kann allerdings auch derart getroffen sein, daß die Außenhaut in einem gewissen Ausmaß zur Stabilität der Gesamtanordnung beiträgt.

Vorteilhafte Weiterbildungen der Neuerung sind in den Unteransprüchen beschrieben.

Das Teleskopelement kann als Teleskopkasten augebildet sein. Es ist allerdings auch möglich, das Teleskopelement als flaches Längsprofil oder als langgestreckten Streifen oder als Lamelle auszubilden.

Eine weitere vorteilhafte Weiterbildung ist dadurch gekennzeichnet, daß der Trägerrahmen einen Rahmenteil und eine oder mehrere Querstreben umfaßt. Der Rahmenteil bildet die äußere Umrandung des Trägerrahmens. Die Querstreben verbinden Teile des Rahmenteils, insbesondere einander gegenüberliegende Teile des Rahmenteils. Die Querstreben können allerdings auch untereinander verbunden sein. Sie können insbesondere sternförmig miteinander verbunden sein.

Der Trägerrahmen kann aus Metall hergestellt sein. Er kann allerdings auch aus Kunststoff hergestellt sein. Es ist ferner möglich, im Trägerrahmen Metall und Kunststoff zu kombinieren.

Die Außenhaut ist vorzugsweise aus Blech, insbesondere aus Federstahlblech, hergestellt. Sie kann allerdings auch aus Kunststoff hergestellt sein. Ferner ist es möglich, Metall und Kunststoff zu kombinieren.

Der Trägerrahmen und die Außenhaut können durch Verkleben und/oder Verschweißen und/oder Vernieten miteinander verbunden sein.

Die Erfindung betrifft ferner eine Abdeckung für eine Maschine oder sonstige Vorrichtung, insbesondere für eine Werkzeugmaschine, die duch eines oder mehrere erfindungsgemäße Teleskopelemente gekennzeichnet ist.

Ausführungsbeispiele der Neuerung werden nachstehend anhand der beigefügten Zeichnung im einzelnen erläutert. In der Zeichnung zeigt:
- Fig. 1: ein Teleskopelement für eine Abdeckung an einer Werkzeugmaschine in einer perspektivischen Darstellung und
- Fig. 2: eine Abwandlung dieses Teleskopelements, ebenfalls in einer perspektivischen Darstellung.

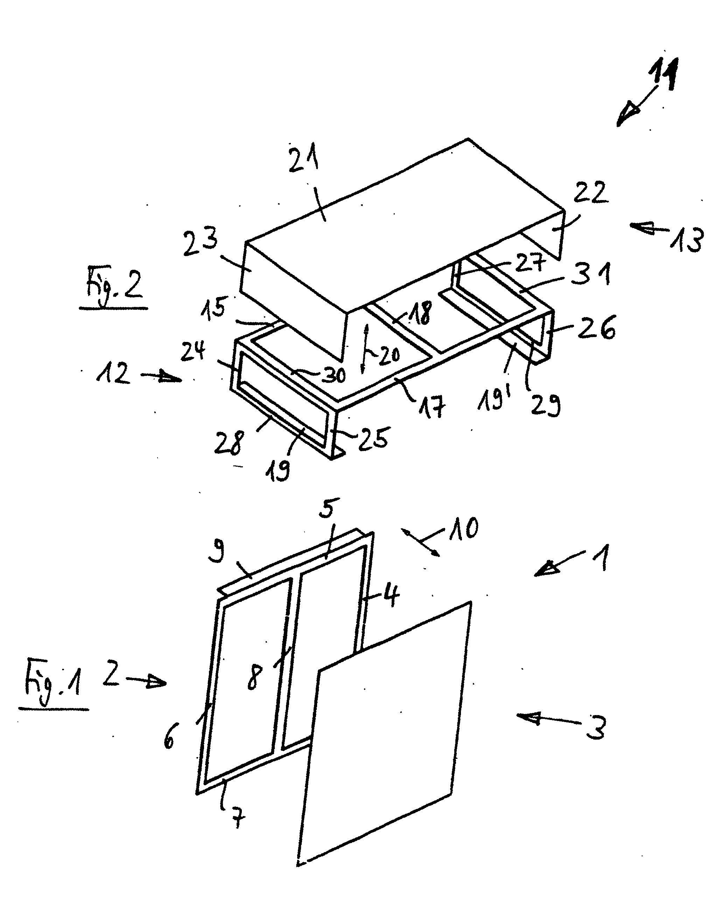

Das in Fig. 1 gezeigte Teleskopelement 1 umfaßt einen Trägerrahmen 2 und eine Außenhaut 3. Der Trägerrahmen umfaßt einen Rahmenteil, der aus den Flachprofilen 4, 5, 6, 7 zusammengesetzt ist, und eine ebenfalls als Flachprofil ausgestaltete Querstrebe 8, die die gegenüberliegenden Flachprofile 5, 7 des Rahmenteils miteinander verbindet. Die Querstrebe 8 liegt in der Mitte zwischen den Flachprofilen 4 und 6; sie verläuft parallel zu diesen. Der Rahmenteil ist quadratisch ausgestaltet. An dem Flachprofil 5 ist eine rechtwinklig dazu verlaufende Lasche 9 vorgesehen.

Der Trägerrahmen 2 und die Außenhaut 1 werden miteinander verklebt oder verschweißt oder vernietet, wie durch den Doppelpfeil 10 angedeutet.

Bei der in Fig. 2 gezeigten abgewandelten Ausführungsform ist das Teleskopelement als Teleskopkasten 11 ausgebildet. Die Außenhaut 13 umfaßt einen ebenen Mittelteil 21 und zwei seitliche, im wesentlichen rechtwinklige Abkantungen 22, 23. Dementsprechend besteht der Rahmenteil 12 aus den einander gegenüberliegenden, parallel zueinander und im Abstand voneinander verlaufenden Flachprofilen 15, 17, den seitlichen Flachprofilen 24, 25, 26, 27 und den endseitigen Flachprofilen 28, 29. An den Verbindungsstellen zwischen den seitlichen Flachprofilen 24 - 27 und den Flachprofilen 15,17 sind Querstreben 30, 31 vorgesehen, durch die gegenüberliegende Teile des Rahmenteils miteinander verbunden werden. Zwischen den Querstreben 30, 31 verläuft die mittlere Querstrebe 18, die die Flachprofile 15, 17 in der Mitte miteinander verbindet und die in der Mitte zwischen den Querstreben 30, 31 sowie parallel zu diesen verläuft.

An den endseitigen Flachprofilen 28, 29 sind ferner im wesentlichen rechtwinklig abgekantete, einander zugewandte Laschen 19, 19' vorgesehen.

Die Außenhaut 13 wird, wie durch den Doppelpfeil 20 angedeutet, mit dem Trägerrahmen 12 verklebt oder verschweißt oder vernietet.

Das Teleskopelement bzw. der Teleskopkasten wird durch Verbindung einer dünnen, verschleißfesten Außenhaut, beispielsweise aus Federstahlblech, oder Kunststoff mit einem Trägerrahmen aus Metall oder Kunststoff durch Verkleben oder Schweißen oder Vernieten hergestellt. Gemäß der Erfindung wird das Ziel der Gewichtsreduzierung der bewegten Massen erreicht. Es können verschleißfestere, je nach Bedarf angepaßte Oberflächen realisiert werden.

## Patentansprüche

1. Teleskopelement für eine Abdeckung an einer Maschine, insbesondere an einer Werkzeugmaschine,
**gekennzeichnet durch**
einen Trägerrahmen (2; 12) und eine Außenhaut (3; 13).

2. Teleskopelement nach Anspruch 1, **dadurch gekennzeichnet, daß** das Teleskopelement als Teleskopkasten (11) ausgebildet ist.

3. Teleskopelement nach Anspruch 1 oder 2, **dadurch gekennzeichnet, daß** der Trägerrahmen (2, 12) einen Rahmenteil (4, 5, 6, 7; 15, 17, 24, 25, 26, 27, 28, 29) und eine oder mehrere Querstreben (8; 18, 30, 31) umfaßt.

4. Teleskopelement nach einem der vorhergehenden Ansprüche, **dadurch gekennzeichnet, daß** der Trägerrahmen (2; 12) aus Metall und/oder aus Kunststoff hergestellt ist.

5. Teleskopelement nach einem der vorhergehenden Ansprüche, **dadurch gekennzeichnet, daß** die Außenhaut (3; 13) aus Blech, insbesondere Federstahlblech und/oder aus Kunststoff, hergestellt ist.

6. Teleskopelement nach einem der vorhergehenden Ansprüche, **dadurch gekennzeichnet, daß** der Trägerrahmen (2; 12) und die Außenhaut (3; 13) durch Verkleben und/oder Verschweißen und/oder Vernieten miteinander verbunden sind.

7. Abdeckung für eine Maschine, insbesondere für eine Werkzeugmaschine,
**gekennzeichnet durch**
ein oder mehrere Teleskopelemente nach einem der Ansprüche 1 bis 6.

## Claims

1. Telescopic element for a cover on a machine, in particular on a machine tool, **characterized by** a support frame (2; 12) and an outer skin (3; 13).

2. Telescopic element according to Claim 1,
**characterized in that** the telescopic element is designed as a telescopic box (11).

3. Telescopic element according to Claim 1 or 2,
**characterized in that** the support frame (2, 12) comprises a frame part (4, 5, 6, 7; 15, 17, 24, 25, 26, 27, 28, 29) and one or more cross struts (8; 18, 30, 31).

4. Telescopic element according to one or more of the preceding claims, **characterized in that** the support frame (2; 12) is made of metal and/or of plastic.

5. Telescopic element according to one of the preceding claims, **characterized in that** the outer skin (3; 13) is made of sheet metal, in particular of spring steel sheet, and/or of plastic.

6. Telescopic element according to one of the preceding claims, **characterized in that** the support frame (2; 12) and the outer skin (3; 13) are connected to one another by adhesive bonding and/or welding and/or riveting.

7. Cover for a machine, in particular for a machine tool, **characterized by** one or more telescopic elements according to one of Claims 1 to 6.

## Revendications

1. Elément télescopique pour un recouvrement à une machine, en particulier à une machine-outil, **caractérisé par** un châssis de support (2; 12) et une peau extérieure (3; 13).

2. Elément télescopique selon la revendication 1,
**caractérisé en ce que** l'élément télescopique est réalisé comme caisson télescopique (11).

3. Elément télescopique selon la revendication 1 ou 2,
**caractérisé en ce que** le châssis de support (2; 12) comprend une partie de châssis (4, 5, 6, 7; 15, 17, 24, 25, 26, 27, 28, 29) et une ou plusieurs barres transversales (8; 18, 30, 31).

4. Elément télescopique selon l'une des revendications précédentes, **caractérisé en ce que** le châssis de support (2; 12) est réalisé en métal et/ou en matériau synthétique.

5. Elément télescopique selon l'une des revendications précédentes, **caractérisé en ce que** la peau extérieure (3; 13) est réalisée en tôle, en particulier en tôle d'acier à ressorts et/ou en matériau synthétique.

6. Elément télescopique selon l'une des revendications précédentes, **caractérisé en ce que** le châssis de support (2; 12) et la peau extérieure (3; 13) sont reliés entre eux par collage et/ou soudage et/ou rivetage.

7. Recouvrement pour une machine, en particulier pour une machine-outil, **caractérisé par** un ou plusieurs éléments télescopiques selon l'une des revendications 1 à 6.
